# EUROPEAN PATENT SPECIFICATION

(11) **EP 1 703 257 B1**
(45) Date of publication and mention of the grant of the patent: **18.11.2009**
(21) Application number: 06004841.0
(22) Date of filing: 09.03.2006
(51) Int. Cl.: G01C 21/34, G06F 17/30

(54) **Point searching apparatus and method of searching**
Punktsuchvorrichtung und Suchverfahren
Appareil de recherche de point et procédé de recherche

(30) Priority: 15.03.2005 JP 2005072475
(43) Date of publication of application: 20.09.2006
(73) Proprietor: Sony Corporation, Tokyo (JP)
(72) Inventor: Ando, Yuichi, Tokyo (JP); Ota, Takeshi, Tokyo (JP); Watanabe, Isao, Tokyo (JP); Arie, Takumi, Tokyo (JP); Amano, Hiroshi, Tokyo (JP)
(74) Representative: Körber, Martin Hans

(56) References cited:
- US-A1- 2002 002 600
- US-A1- 2003 229 441
- US-A1- 2004 254 723
- US-B1- 6 370 523

## Description

### CROSS REFERENCES TO RELATED APPLICATIONS

The present invention contains subject matter related to Japanese Patent Application JP 2005-072475 filed in the Japanese Patent Office on March 15, 2005, the entire contents of which are incorporated herein by reference.

### BACKGROUND OF THE INVENTION

### 1. Field of the Invention

The present invention relates to a point searching apparatus configured to search through a point information database and a method of searching for point information.

### 2. Description of the Related Art

For descriptions of the related art, refer to Japanese Unexamined Patent Application Publication Nos. 2003-207346 and 2000-74685.

In general, an in-vehicle navigation apparatus computes an optimal route to a destination set by a user and carries out a navigation procedure by displaying the route to the destination on a map image displayed on a displaying unit.

To begin the navigation procedure, the user must input a destination. There are various methods of inputting a destination, such as inputting the address or a place-name, assigning a location on a map, or retrieving a destination from a database.

There is a searching method known as the point-of-interest (POI) method. According to the POI method, for example, in response to an operation carried out by the user, a database including categorized point information, which is POI information, is searched and the retrieved results are displayed in a list. Then, the user can select one of the items in the list and register this item as the destination.

A search may be triggered by the user in various ways, such as selecting a predetermined category included in a menu and using the selected category as a key for the search or inputting a character string and using the input character string as a key for the search.

Document US 2002/0002600 A1 discloses an apparatus enabling a user to search information within a certain region. When a user inputs a search term and a search place, then the apparatus does not only search within the input search place but also within other regions which are considered to be within a reachable area from the input search place. All found information relating to the search term and the reachable regions are then displayed.

Document US 2003/0229441 A1 relates to a dynamic navigation system and proposes a method for downloading map information from a mapping server to a client device. Herefor, map data are stored on a server, the map data including vector information delineating roads in a map. A portion of the vector information corresponding to an area in which a user of a mobile client device is travelling is downloaded from the server to the client device. Approximate position coordinates of the user are found using a location providing device associated with the client device and are corrected in the client device, using the downloaded vector information, so as to determine a location of the user on one of the roads in the map. A navigation aid is provided to the user of the client device based on the determined location.

Document US 2004/0254723 A1 discloses a display method and apparatus for arranging order of listing points of interest for a navigation system. The user is enabled to see a list of points of interest (POI) along a route to a destination. The POI names are arranged in the order that the user sees the POIs along the route. The method hereby first determines a route to the destination, and specifies a search area by selecting a distance range on the route from a user position and by defining a radius of a region circle. The method further creates a plurality of region circles consecutively on the route, retrieves POIs within the search area and lists the POIs in the order of their distance.

Document US 6, 370, 523 B1 relates to a system and method for searching business entities providing specific services. For this purpose the coverage areas of the business entities are determined, i.e. the regions in which the business entities service customers. Further, a user defines a reference point a search region in proximity to the reference point. Then the search is accomplished and the intersections of the coverage areas and the search region are determined. Thos business entities whose coverage regions intersect with the search region are then listed to the user.

### SUMMARY OF THE INVENTION

POI information may include various point information items, such as restaurants, various shops, sport facilities, and amusement facilities. As the number of point information items included in the POI database increases, the search load applied to the database becomes greater. In particular, if the POI database includes information on an extensive area, such as the entire country of Japan or all countries in Europe, an enormous amount of data needs to be searched through to retrieve information. As a result, the amount of time required for searching becomes great, and result obtained from the process of searching the POI database will not be quickly provided to the user.

According to an embodiment of the present invention, a process of efficiently searching point information, such as POI information items, can carried out so that the user can obtain desirable search results.

The present invention relates to a point searching apparatus configured to search through a point information database, the point information database managing point information for different areas and allowing a search to be carried out for each area, each area being a predetermined geographical area, the point searching apparatus comprising: searching means for selecting at least one area to be searched on the basis of information on the position of the point searching apparatus and area border information obtained from map information and for retrieving predetermined point information corresponding to the area to be searched from the point information database; and display controlling means for displaying point information retrieved by the searching means, wherein, a selection range for the searching means is a predetermined range set on the basis of the information on the position of the point searching apparatus, wherein areas to be searched by the searching means are selected from the selection range, wherein at least one area intersecting the selection range is selected, and wherein the selection range is extending from the current position of the point searching apparatus in the travelling direction of the point searching apparatus.

Preferably, the searching means changes the selection conditions for selecting the areas to be searched in accordance with an input history of input operations carried out by a user to a display corresponding to the point information.

The present invention further relates to a method of searching point information included in a point information database managing point information for different areas and allowing a search to be carried out for each area, each area being a predetermined geographical area, the method comprising the steps of: determining a user's own position; selecting at least one area to be searched on the basis of the user's own position and area border information obtained from map information; and searching predetermined point information from the point information database corresponding to the area to be searched wherein, a selection range in the searching step is a predetermined range set on the basis of the user's own position, and areas to be searched in the searching step are selected from the selection range, wherein at least one area intersecting the selection range is selected and wherein the selection range is extending from the current position of the user in the travelling direction of the user.

An embodiment of the present invention provides a method of efficiently carrying out, for example, a process of searching POI point information items included in a point information database.

Recently, known databases of map information and POI information used for navigation apparatuses often manage data according to areas so that partial data can be easily updated by the user. For example, a POI database used in Japan may manage the POI information for each prefecture separately, whereas a database used in Europe may manage the POI information for each country separately. In such case, an index used for searching the database will be provided for each prefecture or each country so that a process of searching the POI database can be carried out for each area.

If a search process is carried out only according to a category selected by the user, usually, all areas of a database having the above-described structure will be searched. In such a case, a large amount of data has to be searched and the load of the searching process becomes great. In other words, the time required for the searching process becomes great. On the other hand, if the user specifies the areas to be searched before carrying out the search process, only the specified areas will have to be searched. However, the range the user wants to search may not agree with a predetermined area or the user may find the operation of inputting an area to be searched troublesome. In the vicinity of the borders of between prefectures or countries, a desirable search process cannot be carried out in a specified area. For example, a particular point information item may not be included in the search range even if the point information item is close to the position of the automobile.

According to an embodiment of the present invention, the database is searched by selecting areas to be search on the basis of the current position of the user, or the position of the vehicle. In this way, all areas do not have to be searched, and only areas that are close to the user and that include point information which could be a practical choice as a destination are displayed.

According to an embodiment of the present invention, since at least one area is selected on the basis of the position of the apparatus and a database is searched on the basis of the selected area, the database can be searched quickly and useful point information can be retrieved because only areas that are important to the user are included in the areas to be searched. In other words, the efficiency of the search process of the database is improved and a POI list can be accurately and quickly displayed on the navigation apparatus.

In response to a user input history for the search results, the selection conditions for the areas to be searched can be updated. In this way, an optimal search process for the user can be carried out.

### BRIEF DESCRIPTION OF THE DRAWINGS

Fig. 1 illustrates a block diagram of a the structure of a navigation apparatus according to an embodiment of the present invention;
Fig. 2 illustrates a schematic view of the CPU function of the navigation apparatus according to an embodiment of the present invention;
Fig. 3 illustrates a schematic view of a POT database according to an embodiment of the present invention;
Fig. 4 illustrates a flow chart of a POI search process according to an embodiment of the present invention;
Fig. 5 illustrates a schematic view of selecting areas to be searched according to an embodiment of the present invention; and
Fig. 6 illustrates a schematic view of a display example of a search result according to an embodiment of the present invention.

### DESCRIPTION OF THE PREFERRED EMBODIMENTS

An in-vehicle navigation apparatus will be described below as an illustrative embodiment of a point searching apparatus and a method of searching according to the present invention.

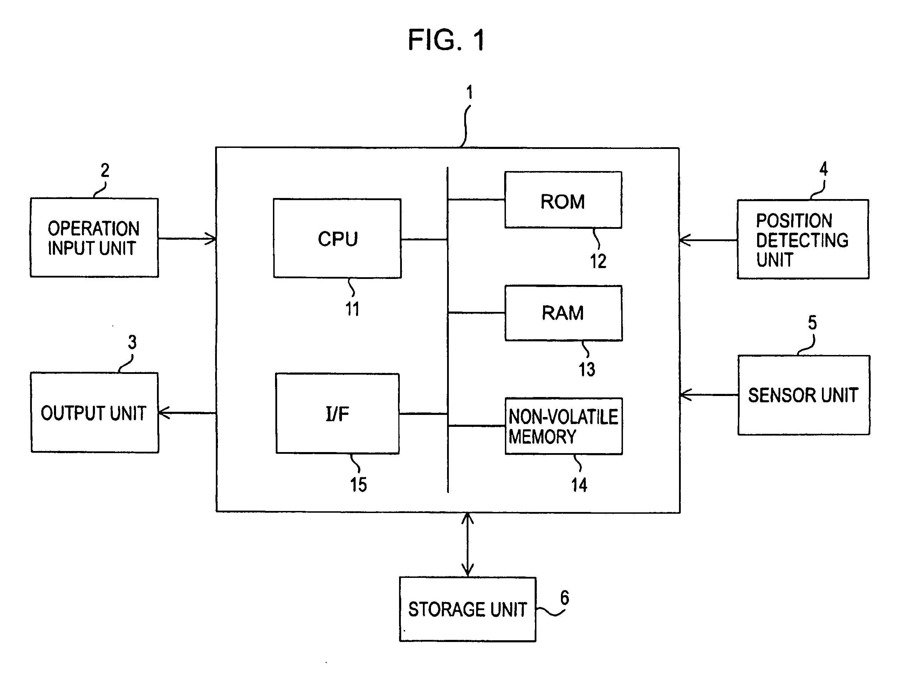

Fig. 1 illustrates the hardware configuration of the navigation apparatus. The navigation apparatus includes a arithmetic processing unit 1, an operation input unit 2, an output unit 3, a position detection unit 4, a sensor unit 5, and a storage unit 6. The units may be provided as a single unit or may be disposed in individual chassis and connected via wire-communication or wireless-communication. Instead, some of the units may be provided as a unit and the rest may be provided as individual units.

In response to an operation carried out by the user, the operation input unit 2 transmits information on the operation to the arithmetic processing unit 1. For example, the operation input unit 2 may be an operator, such as keys, a jog dial, and/or a stick, provided on a panel of a main chassis accommodating the arithmetic processing unit 1 or as a remote commander provided separately from the main chassis. If the operation input unit 2 is a remote commander, operation information from the operator, such as keys and/or dials, provided on the remote commander is sent to the arithmetic processing unit 1 using infrared rays or microwaves or is sent to the arithmetic processing unit 1 via a wire connected to the chassis accommodating the arithmetic processing unit 1.

The operation input unit 2 may otherwise be a touch panel on a display screen. In such case, the operation input unit 2 will be provided as a single unit with the display unit of the output unit 3. The operation input unit 2 may also be a mouse or a predetermined pointing device that allows a click motion to be carried out on a menu screen and/or an icon displayed on the display unit.

The operation input unit 2 may include a microphone for audio input or a camera for image input. In such a case, the operation input unit 2 may include an audio recognition device or an image recognition device that enables operation information to be input as audio or image to the arithmetic processing unit 1. The audio recognition device or the image recognition device may be included in the arithmetic processing unit 1 so that the audio or image input is recognized as operation information and/or various types of input information at the arithmetic processing unit 1.

The output unit 3 is a unit configured to transmit output data that is the computation results from the arithmetic processing unit 1 to the user. The output unit 3 is an image output device, such as a display (display unit), or an audio output device, such as a speaker.

The position detection unit 4 is a device configured to detect the position of the navigation apparatus, i.e., the position of the vehicle on which the navigation apparatus is mounted. The position detection unit 4 may be a positioning device using a global positioning system (GPS). A known GPS positioning system is capable of determining the position of the vehicle on which the GPS positioning system is disposed in longitude and latitude values corresponding to a position on a map by receiving microwaves sent from a plurality of GPS satellites to calculate the distance from a stationary satellite.

The position detection unit 4 sends longitude and latitude information corresponding to the position of the vehicle to the arithmetic processing unit 1.

The sensor unit 5 is configured to detect the driving condition and behavior of the vehicle. For example, the sensor unit 5 may be a speed sensor configured to detect the number of rotations of the tires, a vibration gyroscopic sensor configured to detect the rotational angle rate of the vehicle body, an acceleration sensor configured to detect the acceleration of the vehicle, or a vibration sensor configured to detect the vibration of the vehicle. The sensor unit 5 may also be a device configured to detect the condition of the driving device of the vehicle, such as a parking break switch, a break lamp switch, a steering rudder sensor, and/or a throttle position sensor.

The information detected at the sensor unit 5 is sent to the arithmetic processing unit 1. The arithmetic processing unit 1 uses both the detection information from the sensor unit 5 and the position information from the position detection unit 4 to determine the position of the vehicle in a highly accurate manner.

The storage unit 6 is a storage device configured to store a large amount of data, such map data, a POI information database, search information, and music/image content data. The storage unit 6 is, for example, a disk drive device using an optical disk, such as a compact disk read only memory (CD-ROM) or a digital versatile disc (DVD), as a recording medium or a read/write device using a magnetic recording medium such as a hard disk drive. The storage unit 6, instead, may be a card reader/writer using a memory car with an embedded solid-state memory as a recording medium or a storage device using a solid-state memory.

The storage unit 6 may be accommodated by the main chassis together with the arithmetic processing unit 1 or may be provided separately from the arithmetic processing unit 1 and be connected to the arithmetic processing unit 1 via wire-communication or wireless-communication.

The arithmetic processing unit 1 carries out computations required for the navigation apparatus. The arithmetic processing unit 1 includes, for example, a central processing unit (CPU) 11, a read only memory (ROM) 12, a random access memory (RAM) 13, a non-volatile memory 14, and an interface unit 15.

The ROM 12 stores constant values and fixed information used in an operation program and other various processes. The operation program may be stored on a recording medium used by the storage unit 6 and be loaded into the arithmetic processing unit 1 when the navigation apparatus is operated.

The RAM 13 is used as a work area, a program-loading area, a temporary storage area.

The non-volatile memory 14 is a rewritable memory that is capable of storing data even after the power supply of the system is shut off. The non-volatile memory 14 is, for example, a static RAM (SRAM) or a flash memory having a back-up battery. The non-volatile memory 14 stores coefficients used in various processes, information registered by the user, route information assigned by the user, or information on the vehicle's driving history.

The CPU 11 carries out information processing and control processing required for the navigation apparatus in accordance with the programs stored in the ROM 12. To carry out information processing and control processing, the CPU 11 uses RAM 13 as a work area and refers to the information stored in the ROM 12 and the non-volatile memory 14.

The interface unit 15 is used for input and output between the arithmetic processing unit 1 and other units, i.e., the operation input unit 2, the output unit 3, the position detection unit 4, the sensor unit 5, or the storage unit 6. The interface unit 15 receives operation information and various input information from the operation input unit 2, position information from the position detection unit 4, and detection information from the sensor unit 5 and transmits the received information to the CPU 11. The interface unit 15 supplies control information output from the CPU 11, image data, and audio data to the output unit 3 to output images and audio required for the navigation apparatus. The interface unit 15 transmits an access request from the CPU 11 to the storage unit 6 so that the storage unit 6 carries out predetermined data reproduction and, if required, data recording. The interface unit 15 sends map data and so on read out from the storage unit 6 to the arithmetic processing unit 1.

According to this embodiment, map information and the POT database are stored on a storage medium used by the storage unit 6. However, such information may be stored on an external server and may be sent to the storage unit 6 via wire-communication or wireless-communication.

In other words, the navigation apparatus may include a communication unit for communicating with an external server and a data storage unit, such a hard disk drive, to store map information and a POI database obtained by communicating with an external server.

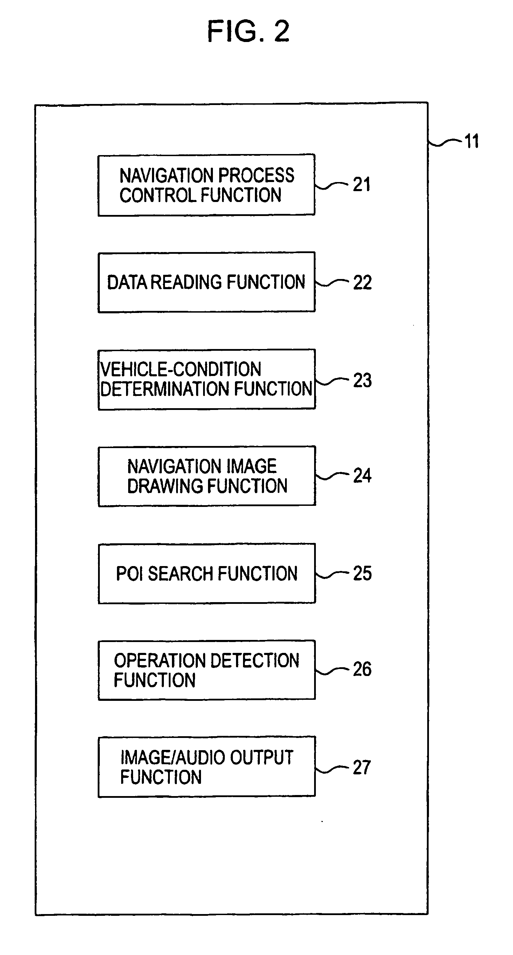

Fig. 2 illustrates functions of the CPU 11, i.e., functions realized by computations carried out in accordance with the programs stored on the ROM 12.

The functions of the CPU 11 include a navigation process control function 21, a data reading function 22, a vehicle-condition determination function 23, a navigation image drawing function 24, a POI search function 25, an operation detection function 26, and an image/audio output function 27. These functions may be realized by individual program modules or may be realized by one program that is capable of executing a plurality of functions.

The navigation process control function 21 controls the overall processing operation required for the navigation apparatus in order to carry out a systematic navigation operation by assigning processes for and controlling the timing of other functions. Moreover, the navigation process control function 21 controls the registration of a destination and/or a mid-points selected by the user, the processing for searching a route, the displaying of guidance information for the vehicle in motion, and the output of an audio guidance.

The data reading function 22 accesses the storage unit 6. More specifically, the data reading function 22 controls the access to the storage unit 6 and reads out map data stored on the storage unit 6 according to instructions from the navigation process control function 21. For example, the data reading function 22 reads out map information corresponding to a range required by the current position of the vehicle, a position selected by the user, or a route specified by the user.

The data reading function 22 also accesses the POI database stored in the storage unit 6 to search the POI database, for example, when instructed by the POI search function 25.

The data reading function 22 also reads out various other data stored in the storage unit 6 in addition to the map information and the POI data. If the storage unit 6 is a device that allows data to be written in, data writing is also controlled by the data reading function 22.

The vehicle-condition determination function 23 determines the current position and the behavior of the vehicle on the basis of the position information from the position detection unit 4 and the detection information from the sensor unit 5.

The navigation image drawing function 24 generates image data to be displayed on the display of the output unit 3 on the basis of map information read out by the data reading function 22, the current vehicle position determined by the vehicle-condition determination function 23, the results of searching the POI database, operation carried out by the user, and information registered by the user. The image data includes map images, menu images, icon images, various other images, and various guidance images. Such image data is generated on the basis of instructions from the navigation process control function 21 and displayed on the display of the output unit 3.

The POI search function 25 searches through the POI database. Although details of the search process will be described below, the POI search function 25 searches the POI database on the basis of areas selected to be searched or a category selected by the user. In case the POI database is stored in the storage unit 6, the POI search function 25 instructs the data reading function 22 to access the POI database stored in storage unit 6 during the search process.

The operation detection function 26 detects the input of operation information from the operation input unit 2 and other various input information and transmits the input information to the navigation process control function 21. The navigation process control function 21 controls each function on the basis of information detected by the operation detection function 26 to carry out the necessary operations.

The image/audio output function 27 controls the output unit 3 to output image data and audio data to the user on the basis of instructions from the navigation process control function 21. The output data includes map images, menu images, and various guidance images generated by the navigation image drawing function 24.

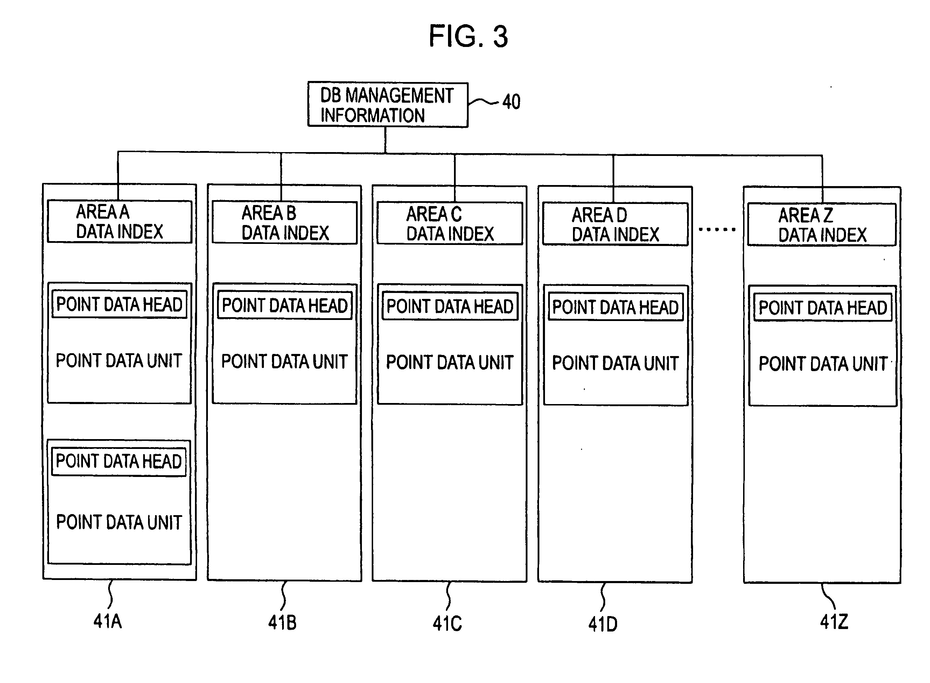

Next, the structure of the POI database will be described with reference to Fig. 3.

The POI database includes database management information 40 that is the management information for the overall structure of the POI database. Under the database management information 40, search data structures 41 (41A, 41B, ..., 41Z) corresponding to different "areas" are provided.

Here, an "area" is a predetermined geographical area, such as a country, a state, or a prefecture. For example, in a region where many countries share a common border, such as in Europe, an "area" may represent to a country. For the United States, an "area" may represent a state. For Japan, an "area" may represent a prefecture. For China, an "area" may represent a province. However, the geographical area represented by an "area" is not limited, and, for example, an "area" in Europe may represent a region equivalent to a prefecture. Each "area" may represent a different type of geographical region. For example, in Japan, an "area" may represent a prefecture, except for Hokkaido, where an "area" may represent a county. Moreover, a plurality of prefectures may be represented as one "area."

The "areas" may be set in accordance with the search data structures 41 of the POI database. More specifically, the "areas" may be set by taking into consideration the updating of the POI database, the search performance, the usability according to each region, and the number of POI data items corresponding to each region.

According to the search data structures 41A, 41B, ..., 41Z, actual point data items included in the "areas" can be searched by category and so on.

For example, the search data structure 41A includes the point data for an area A, i.e., a point data unit including POI information for the area A. One point data unit includes a plurality of point data items (POI information items).

The number of point data units included in one search data structure 41 depends on the number of POI information items corresponding to the area.

The number of POI information items stored in a point data unit and the address and data size of each POI information item are written in the point data head of the corresponding point data unit.

Each of the search data structures 41A, 41B, ..., 41Z includes a data index for retrieving a POI information item included in the point data unit.

For example, the search data structure 41A includes a data index for the area A. This data index allows a POI information item stored in the point data unit in the search data structure 41A to be retrieved.

This other the search data structures 41B to 41Z also include data indices.

According to the structure of a POI database, as shown in Fig. 3, the POI database can be searched by "areas." For example, to search an area B, the data index for the area B included in the search data structure 41B is searched. If an area is not specified, all of the data indices in all of the search data structures 41A to 41Z are searched.

Next, the operation for searching POI database according to this embodiment will be described.

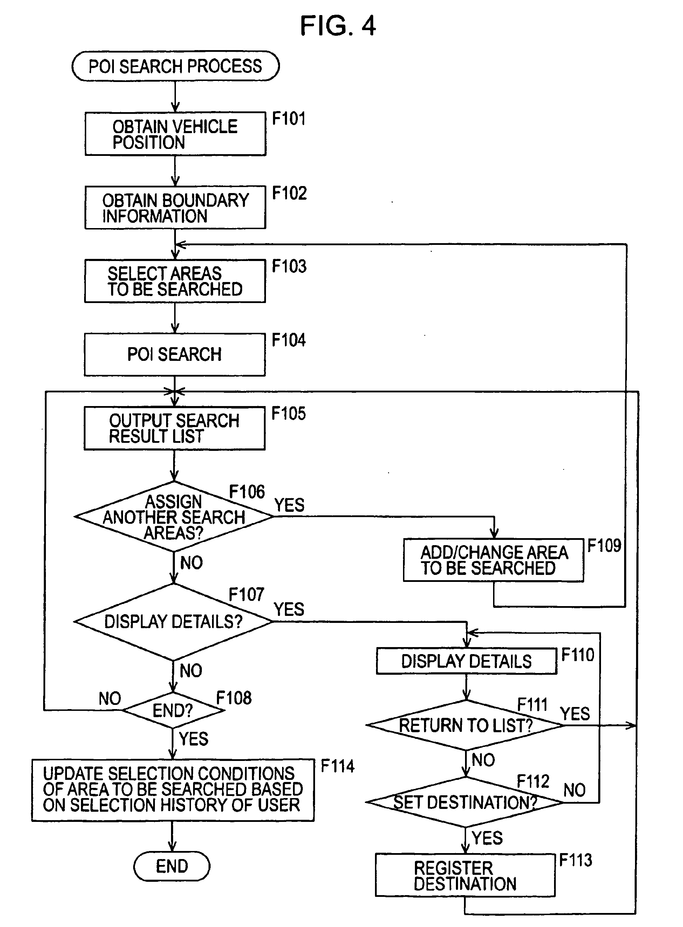

Fig. 4 illustrates the process carried out by the CPU 11 to search through the POI database. This process is carried out by the functions of the CPU 11, shown in Fig. 2, when the user carries out an operation that triggers a process for searching through the POI database.

When the operation detection function 26 detects that the user has carried out an operation for triggering the process for searching through the POI database, for example, by assigning a category using the operation input unit 2, the POI search function 25 operates in accordance with instructions from the navigation process control function 21 to carry out the steps shown in Fig. 4 in order.

First, in Step F101, the POI search function 25 obtains the current position of the vehicle determined by the vehicle-condition determination function 23 on the basis of the position information sent from the position detection unit 4.

In Step F102, the POI search function 25 obtains border information from the map information read out by the data reading function 22. Border information is information on the borders in each area in the POI database and, for example, is information on borders between countries, states, or prefectures.

After obtaining the information on the current position of the vehicle and the information on the borders, in Step F103, the POI search function 25 selects the areas to be searched. The POI search function 25 selects the areas to be searched from areas included in a predetermined range based on the current position of the vehicle.

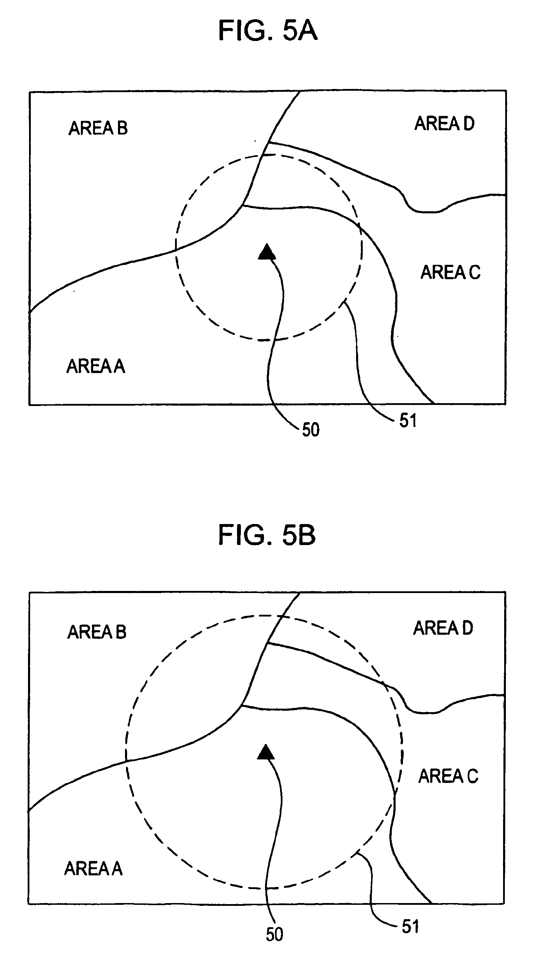

Fig. 5A illustrates an example of areas selected to be searched. As shown in Fig. 5A, the current vehicle position 50 is included in the area A and is located near the borders of the areas B and C.

At this time, the POI search function 25 selects a circular range 51 centered on the current vehicle position 50 with a diameter of X km. The areas included in the circular range 51 are searched. In the case shown in Fig. 5A, the areas A, B, and C are searched.

In this example, three areas correspond to the areas to be searched. However, the number of areas to be searched is not limited and may be one, two, four, or more. For example, if the current vehicle position 50 is in the area A and is far away from the borders of the other areas, i.e., if the circular range 51 does not include any borders, only the area A will be searched. In the contrary, if the current vehicle position 50 is at a point where the borders of a plurality of areas meet, all of the areas included in the circular range 51 will be searched.

The circular range 51 is not limited to a range centered on the current vehicle position 50 with a diameter of X km that is a circular area concentric with the current vehicle position 50 and has a diameter of X km. Instead, the circular range 51 may be shaped as a square, a rectangle, a triangle, or an oval centered on the current vehicle position 50. The circular range 51 does not necessarily have to be centered on the current vehicle position 50. For example, the circular range 51 may be shaped as a long oval, a circle, a fan, or an inverted triangle, each extending from the current vehicle position 50 in the traveling direction of the vehicle.

After the POI search function 25 selects the areas to be searched in Step F103, the POI search function 25 carries out the search process in Step F104. The POI search function 25 searches the POI database by instructing the data reading function 22 to access the storage unit 6. At this time, the search process is carried out in only the areas selected to be searched. For example, if the areas A, B, and C are selected to be searched, as shown in Fig. 5A, only the data indices in the search data structures 41A, 41B, and 41C of the POI database shown in Fig. 3 are searched. In other words, the other search data structures 41D to 41Z are not searched.

After POI information item are retrieved as a result of the search process, in Step F105, a list of the POI information item retrieved as a result of the search process is output for display. More specifically, the POI search function 25 sends the POI information items that correspond to possible destinations retrieved as a result of the search process to the navigation image drawing function 24 to generate image data for displaying the list of possible destinations. The generated image data is sent to the output unit 3 by the image/audio output function 27 and is displayed on the display unit of the output unit 3.

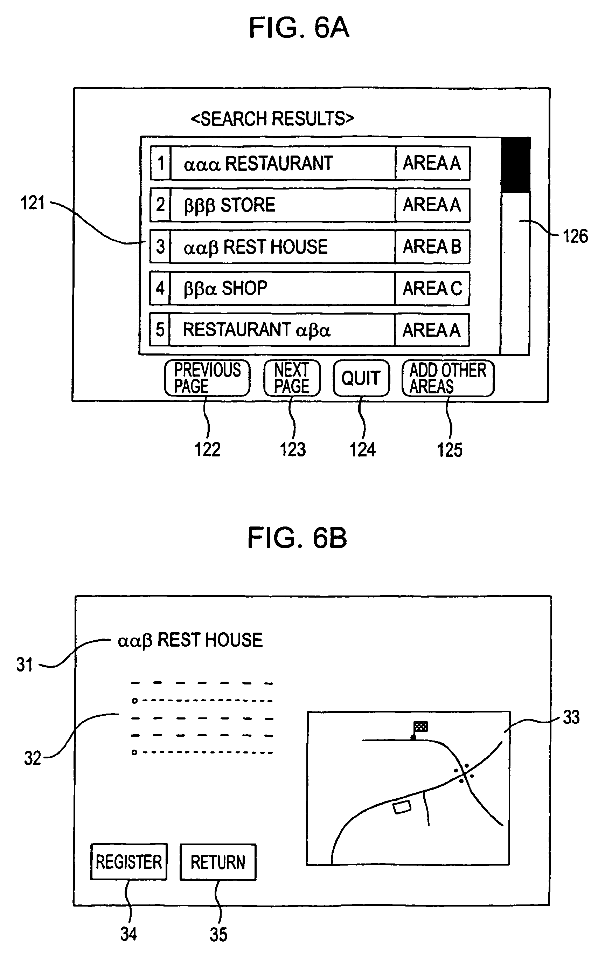

Fig. 6A illustrates an example of a list displaying possible destinations. In this example, the displayed list includes the retrieved results of a search process carried for the category "restaurant" assigned by the user. The example shows a list 121 including a plurality of restaurant names corresponding to the retrieved POI information items. If all the items in the list 121 cannot be display on a single page, the user can operate a scroll bar 126, a "previous page" icon 122, and a "next page" icon 123 to display other items included in the list 121.

A "quit" icon 124 operated to turn off the display of the list 121 and to end the process of selecting a destination from the list and a "search again" icon 125 operated to change the range to be searched or change the search conditions to carry out a search process again are displayed.

The list 121 may include the names of the destinations and the names of the areas including the destinations, as shown in the drawing.

Since only selected areas (areas A, B, and C) were searched, as described above, all of the possible destinations listed in list 121 are included in the areas A, B, or C.

The user refers to the list 121 including the possible destinations to decide whether to select a destination from the list, to assign another search process, or to end the process of searching the POI database. In Steps F106, F107, and F108, the operation detection function 26 of the CPU 11 monitors the operation carried out in response to the display by the user.

When the user selects one of the possible destinations from the list 121, the CPU 11 proceeds the process from Steps F107 to F110 and displays details of the selected destination. More specifically, a detail image based on detailed information on the selected destination is generated by the navigation image drawing function 24 and is displayed at the output unit 3. For example, if the third destination listed in Fig. 6A is selected, a detailed image such as that shown in Fig. 6B will be displayed. This detailed image includes detailed information registered as POI data, such as a name 31 of the shop, a description 32 of the shop, and a map 33 to the shop.

A "register" icon 34 that is operated by the user to register a destination and a "return" icon 35 operated to return to the list display 21 are displayed.

The user can refer to the list 121, as shown in Fig. 6A, to selects a destination. Then, the user can refer to a detailed image, such as that shown in Fig. 6B, to decide whether or not to register the selected destination as an actual destination. If the user decides to register the selected destination as the actual destination, the user operates the "register" icon 34 on the screen, as shown in Fig. 6B. To select a different destination from the list 121, the user operates the "return" icon 35.

While the detailed image is displayed, the CPU 11 monitors the operations carried out by the user in Steps F111 and F112. If the user operates the "register" icon 34, the process goes from F112 to F113, and the selected destination shown in the detailed display is registered as the actual destination. More specifically, the list display 21 sets the corresponding POI information item as the actual destination. The POI information item registered as the actual destination is displayed on the navigation map after a route to the destination corresponding to the POI information item is determined by the navigation process control function 21. In response, a route is. In Step F113, the POI information item registered as the actual destination is added to the selection history information and is recorded as a POI information item that has been selected by the user. To add such information to selection history, for example, an area for storing the selection history information may be provided in the non-volatile memory 14, and every time a destination is registered as an actual destination in Step F113, the destination (POI information item) is added to the selection history information.

The process returns to Step F105, and the list 121 is displayed on the screen again, as shown in Fig. 6A.

If the user operates the "return" icon 35 while detailed information is being displayed, the CPU 11 returns the process from Step F111 to Step F105 to display the list 121 on the screen again, as shown in Fig. 6A.

If the user does not want to select a destination from the list 121 of possible destinations in Step F105, the user can operate the "search again" icon 125 to change the search range and search conditions and carry out a search process again.

If the user operates the "search again" icon 125, the CPU 11 proceeds from Step F106 to Step F109 to add or change the areas to be searched. For example, the settings of the circular range 51 for selecting the areas to be searched can be changed. For example, if the circular range 51 centered on the current vehicle position 50 with a diameter of X km, as described above, the diameter may be increased to Y km (X<Y) .

Then, the process returns to Step F103 to select the areas to be searched again using the new circular range 51. Fig. 5B illustrates an example of an enlarged circular range 51. By enlarging the circular range 51, as shown in Fig. 5B, an area D can be added to the areas A, B, and C to be searched.

The POI database is searched again in Step F104. At this time, the data index of the area D is also included in the search range. In Step F105, a list of the possible destinations retrieved from the areas A, B, C, and D is displayed.

In this example, the circular range 51 is enlarged and the number of areas to be searched is increased. However, the search range and search conditions set in Step F109 can be changed in various ways.

For example, instead of enlarging, the circular range 51 may be reduced.

For another example, if the circular range 51 extends in the traveling direction of the vehicle, the circular range 51 can be modified to include areas in the opposite direction (i.e., areas behind the vehicle).

Changes are not limited to the circular range 51. It is also possible remove an area that has already been searched from the areas to be searched or add areas, not included in the circular range 51, that are adjacent to the areas to be search and/or the area including the current position of the vehicle.

If the user operates the "quit" icon 124 displayed on the same screen with the list 121 in Step F105, the CPU 11 proceeds from Step F108 to Step F114.

In Step F114, before ending the process of searching the POI database, the current selection history information is checked and matched against predetermined conditions. If necessary, the selection conditions for the areas to be search are updated on the basis of the selection history. Then, the process of searching the POI database is ended.

If the selection conditions of the areas to be searched are updated, the updated selection conditions are used in the next process of searching the POI database carried out in Step F103.

In this way, the updating of the selection conditions corresponding to the selection history obtained in Step F114 is equivalent to a learning function for obtaining desirable settings for the user. For example, if the selection history indicates that the destinations selected by the user are always included in the same area, it can be determined that, for this particular user, other areas do not have to be searched. Accordingly, the selection conditions of the areas to be searched are changed so that only that particular area is searched whenever another process of searching the POI database is carried out. If the areas A, B, C, and D, illustrated in Fig. 5A, are countries and if the user is a citizen of the area A (country A) whose selection history clearly indicates that the POI information items included in the area A are always selected as destinations, it can be determined that this user almost never registers a POI information item not included in the area A (country A) as the destination. Accordingly, even if the circular range 51 includes the areas B and C, as shown in Fig. 5A, the selection conditions can be changed so that only the area A is efficiently searched. In this way, the time required for the search process is reduced. Moreover, since unwanted destinations are not included in the list 121, the operation required by the user to register a destination can be simplified. By changing the selection condition in accordance with the selection history of the user, an optimal process for searching the POI database can be carried out, as an advantageous effect of the learning effect.

After changing the selection condition so that only a predetermined area is to be searched, the user may want to search areas other than the predetermined area. In such a case, the search process can be carried out again in accordance with Steps F106 and F109.

The CPU 11 carries out the above-described process to increase the efficiency of the process to search through the POI database, having a structure such as that shown in Fig. 2. Efficiency is increased because, instead of searching through every data index of the search data structures 41A to 41Z, only the data indices of selected areas are searched. In this way, a faster search process is possible and the results obtained through the search process can be quickly displayed to the user. Since the possible destinations listed are limited to those located close to the current position of the vehicle, the user can select an actual destination from the list of possible destinations on the basis of practicality, increasing the usability of the navigation apparatus.

An embodiment of the present invention has been described above. However, embodiments of the present invention are not limited to that described above and various modifications may be made to the above-described embodiment. For example, the above-described process of searching for a destination can be carried out not only for retrieving a destination but also to retrieve information on various facilities located in the vicinity of the current position of the vehicle.

Furthermore, the display method of the list of data, the detailed images, the icons on the screen, and the switching of the display in accordance with an operation are not limited those described above.

An in-vehicle navigation apparatus according to an embodiment of the present invention is described above. The present invention may also be employed in a portable navigation apparatus.

It should be understood by those skilled in the art that various modifications, combinations, sub-combinations and alterations may occur depending on design requirements and other factors insofar as they are within the scope of the appended claims or the equivalents thereof.

## Claims

1. A point searching apparatus (1) configured to search through a point information database (40), the point information database (40) managing point information (41A, 41B, ... 41Z) for different areas (A, B, C, D) and allowing a search to be carried out for each area (A, B, C, D), each area (A, B, C, D) being a predetermined geographical area, the point searching apparatus (1) comprising:
searching means (25) for selecting at least one area (A, B, C, D) to be searched on the basis of information on the position (50) of the point searching apparatus (1) and area border information obtained from map information and for retrieving predetermined point information (41A, 41B, ... 41Z) corresponding to the area (A, B, C, D) to be searched from the point information database (40); and
display controlling means (27) for displaying point information (121) retrieved by the searching means (25),
wherein, a selection range (51) for the searching means (25) is a predetermined range set on the basis of the information on the position (50) of the point searching apparatus (1),
wherein areas (A, B, C, D) to be searched by the searching means (25) are selected from the selection range (51) , wherein at least one area (A, B, C, D) intersecting the selection range (51) is selected, and
wherein the selection range (51) is extending from the current position of the point searching apparatus (1) in the travelling direction of the point searching apparatus (1).

2. The point searching apparatus (1) according to Claim 1, wherein the searching means (25) changes the selection conditions for selecting the areas (A, B, C, D) to be searched in accordance with an input history of input operations carried out by a user to a display corresponding to the point information (41A, 41B, ... 41Z).

3. A method of searching point information (41A, 41B, ... 41Z) included in a point information database (40) managing point information (41A, 41B, ... 41Z) for different areas (A, B, C, D) and allowing a search to be carried out for each area (A, B, C, D), each area (A, B, C, D) being a predetermined geographical area, the method comprising the steps of:
determining (F101) a user's own position (50);
selecting (F 103) at least one area (A, B, C, D) to be searched on the basis of the user's own position (50) and area border information obtained from map information; and
searching (F 104) predetermined point information (41 A, 41B, ... 41Z) from the point information database (40) corresponding to the area (A, B, C, D) to be searched
wherein, a selection range (51) in the searching step (F104) is a predetermined range set on the basis of the user's own position (50), and
areas (A, B, C, D) to be searched in the searching step are selected from the selection range (51), wherein at least one area (A, B, C, D) intersecting the selection range (51) is selected and
wherein the selection range is (51) extending from the current position (50) of the user in the travelling direction of the user.

4. The method according to Claim 3, wherein, in the searching step, the selection conditions for selecting the areas (A, B, C, D) to be searched is changed in accordance with an input history of input operations carried out by a user to a display corresponding to the point information (41 A, 41B, ... 41 Z).

## Patentansprüche

1. Eine Punkt-Such-Vorrichtung (1) geeignet zum Durchsuchen einer Punkt-Informations-Datenbank (40), welche Punkt-Informationen (41A, 41B, ... 41Z) für verschiedene Areale (A, B, C, D) verwaltet und es ermöglicht, für jedes Areal eine Suche durchzuführen, wobei jedes Areal (A, B, C, D) ein vorbestimmtes geographisches Areal ist, wobei die Punkt-Such-Vorrichtung (1) umfasst:
Durchsuchungsmittel (25) zum Auswählen mindestens eines zu durchsuchenden Areals (A, B, C, D) auf Basis der Positions-Information (50) der Punkt-Such-Vorrichtung (1) sowie aus Karteninformationen erhaltenen Bereichsgrenz-Informationen und zum Abrufen vorbestimmtes Punkt-Informationen (41A, 41B, ... 41Z), welche mit dem zu durchsuchenden Areal (A, B, C, D) korrespondieren, von der Punkt-Informations-Datenbank (40); und
Display-Kontroll-Mittel (27) zum Darstellen von Punkt-Informationen (121), die von den Durchsuchungsmitteln (25) abgerufen wurden,
wobei ein Auswahlbereich (51) für das Durchsuchungsmittel (25) ein auf Basis der Positions-Information (50) der Punkt-Such-Vorrichtung (1) vorbestimmter Bereich ist,
wobei die durch das Durchsuchungsmittel (25) zu durchsuchenden Areale (A, B, C, D) durch den Auswahlbereich (51) ausgewählt werden,
wobei mindestens ein Areal (A, B, C, D), das sich mit dem Auswahlbereich (51) überschneidet, ausgewählt wird, und
wobei der Auswahlbereich (51) sich von der aktuellen Position der Punkt-Such-Vorrichtung (1) in Richtung der Reiserichtung der Punkt-Such-Vorrichtung (1) erstreckt.

2. Die Punkt-Such-Vorrichtung (1) gemäß Anspruch 1, wobei das Durchsuchungsmittel (25) die Auswahl-Bedingungen für die Auswahl der zu durchsuchenden Areale (A, B, C, D) ändert in Übereinstimmung mit einer Eingabe-Historie von mit den Punkt-Informationen (41A, 41B, ... 41Z) korrespondierenden Eingabe-Operationen, die ein Anwender über ein Display durchgeführt hat.

3. Ein Verfahren zum Suchen von Punkt-Informationen (41A, 41B, ... 41Z), die in einer Punkt-Informations-Datenbank (40) enthalten sind, welche Punkt-Informationen (41A, 41B, ... 41Z) für verschiedene Areale (A, B, C, D) verwaltet und eine Durchführung einer Suche für jedes Areal (A, B, C, D) ermöglicht, wobei jedes Areal (A, B, C, D) ein vorbestimmtes geographisches Areal ist, wobei das Verfahren die Schritte umfasst:
Bestimmen (F103) der dem Anwender eigenen Position (50);
Auswählen (F103) mindestens eines zu durchsuchendes Areals (A, B, C, D) auf Basis der Anwender-eigenen Position (50) sowie aus Karteninformationen erhaltenen Bereichsgrenz-Informationen; und
Suchen (F104) einer vorbestimmten, mit dem zu durchsuchenden Areal (A, B, C, D) korrespondierenden Punkt-Information (41A, 41B, ... 41Z) aus der Punkt-Informations-Datenbank (40),
wobei der Auswahlbereich (51) im Suchschritt (F104) ein auf Basis der Anwender-eigenen Position (50) vorbestimmter Bereich ist, und die zu durchsuchenden Areale (A, B, C, D) im Suchschritt aus dem Auswahlbereich (51) ausgewählt werden, wobei mindestens ein Areal (A, B, C, D), das sich mit dem Auswahlbereich (51) überschneidet, ausgewählt wird, und
wobei der Auswahlbereich (51) sich von der aktuellen Position des Anwenders in Richtung der Reiserichtung des Anwenders erstreckt.

4. Das Verfahren gemäß Anspruch 3, wobei im Suchschritt die Auswahl-Bedingungen für die Auswahl der zu durchsuchenden Areale (A, B, C, D) in Übereinstimmung mit einer Eingabe-Historie von mit den Punkt-Informationen (41A, 41B, ... 41Z) korrespondierenden Eingabe-Operationen, die ein Anwender über ein Display durchgeführt hat, geändert werden.

## Revendications

1. Dispositif (1) de recherche de point constitué pour rechercher dans une base de données (40) d'information de point, la base de données (40) d'information de point gérant de l'information (41A, 41B, ... 41Z) de point pour des zones différentes (A, B, C, D) et permettant d'effectuer une recherche pour chaque zone (A, B, C, D), chaque zone (A, B, C, D) étant une zone géographique prédéterminée, le dispositif (1) de recherche de point comprenant :
un moyen (25) de recherche destiné à choisir au moins une zone (A, B, C, D) dans laquelle on doit rechercher sur la base d'une information sur la position (50) du dispositif (1) de recherche de point et d'une information de limite de zone obtenue à partir d'une information de carte et à récupérer, dans la base de données (40) d'information de point, une information prédéterminée (41A, 41B, ... 41Z) de point correspondant à la zone (A, B, C, D) dans laquelle on doit rechercher ; et
un moyen (27) de commande d'affichage destiné à afficher l'information (121) de point récupérée par le moyen (25) de recherche,
dans lequel, une région (51) de sélection pour le moyen (25) de recherche est une région prédéterminée fixée sur la base de l'information sur la position (50) du dispositif (1) de recherche de point,
dans lequel des zones (A, B, C, D) dans lesquelles le moyen (25) de recherche doit rechercher sont choisies à partir de la région (51) de sélection, dans lequel on choisit au moins une zone (A, B, C, D) en intersection avec la région (51) de sélection, et
dans lequel la région (51) de sélection s'étend à partir de la position actuelle du dispositif (1) de recherche de point dans la direction de déplacement du dispositif (1) de recherche de point.

2. Dispositif (1) de recherche de point selon la revendication 1, dans lequel le moyen (25) de recherche change les conditions de choix pour choisir les zones (A, B, C, D) dans lesquelles on doit rechercher en fonction d'un historique d'entrée d'opérations d'entrée effectuées par un utilisateur pour un affichage correspondant à l'information (41A, 41B, ... 41Z) de point.

3. Procédé de recherche d'information (41A, 41B, ... 41Z) de point incluse dans une base de données (40) d'information de point gérant de l'information (41A, 41B, ... 41Z) de point pour des zones différentes (A, B, C, D) et permettant d'effectuer une recherche pour chaque zone (A, B, C, D), chaque zone (A, B, C, D) étant une zone géographique prédéterminée, le procédé comprenant les étapes :
de détermination (F101) de la propre position (50) d'un utilisateur ;
de choix (F103) d'au moins une zone (A, B, C, D) dans laquelle on doit rechercher sur la base de la propre position (50) de l'utilisateur et d'une information de limite de zone obtenue à partir d'une information de carte ; et
de recherche (F104), dans la base de données (40) d'information de point, d'une information prédéterminée (41A, 41B, ... 41Z) de point correspondant à la zone (A, B, C, D) dans laquelle on doit rechercher,
dans lequel, une région (51) de sélection à l'étape (F 104) de recherche est une région prédéterminée fixée sur la base de l'information sur la propre position (50) de l'utilisateur, et
dans lequel des zones (A, B, C, D) dans lesquelles on doit rechercher à l'étape de recherche sont choisies à partir de la région (51) de sélection, dans lequel on choisit au moins une zone (A, B, C, D) en intersection avec la région (51) de sélection, et
dans lequel la région (51) de sélection s'étend à partir de la position actuelle (50) de l'utilisateur dans la direction de déplacement de l'utilisateur.

4. Procédé selon la revendication 3, dans lequel, à l'étape de recherche, on change les conditions de choix pour choisir les zones (A, B, C, D) dans lesquelles on doit rechercher en fonction d'un historique d'entrée d'opérations d'entrée effectuées par un utilisateur pour un affichage correspondant à l'information (4 1 A, 41B, ... 41Z) de point.
